# EUROPÄISCHE PATENTSCHRIFT

(11) **EP 2 560 800 B1**
(45) Veröffentlichungstag und Bekanntmachung des Hinweises auf die Patenterteilung: **01.03.2017**
(21) Anmeldenummer: 11717939.0
(22) Anmeldetag: 19.04.2011
(51) Int. Cl.: B29B 9/06

(54) **VORRICHTUNG UND VERFAHREN ZUR HERSTELLUNG VON GRANULATKÖRNERN**
APPARATUS AND METHOD FOR PRODUCING GRANULES
DISPOSITIF ET PROCÉDÉ POUR PRODUIRE DES GRANULÉS

(30) Priorität: 21.04.2010 DE 102010015776
(43) Veröffentlichungstag der Anmeldung: 27.02.2013
(73) Patentinhaber: Maag Automatik GmbH, 63762 Großostheim (DE)
(72) Erfinder: DEISS, Stefan, 55896 Harxheim (DE)
(74) Vertreter: Spranger, Stephan
(86) Internationale Anmeldenummer: PCT/EP2011/001984
(87) Internationale Veröffentlichungsnummer: WO 2011/131344

(56) Entgegenhaltungen:
- DE-A1- 3 541 500
- JP-A- 59 123 615
- US-A- 4 529 370
- US-A1- 2010 043 616

## Beschreibung

Die Erfindung betrifft eine Vorrichtung zur Herstellung von Granulatkömem aus einer Schmelze, z.B. einer Kunststoffschmelze, mit einer Lochplatte mit darin angeordneten Schmelzedüsen, aus welchen die Schmelze austritt, wobei der Lochplatte eine Schneidanordnung mit einem Messerkopf mit einem Messerhalter und zumindest einem Messer, und einer Messerwelle, angetrieben von einem Motor, gegenüberliegt, so dass das zumindest eine Messer die Schmelzedüsen in der Lochplatte überstreicht und dabei Granulatkörner des dort austretenden Schmelzematerials abtrennt, wobei die Vorrichtung ein Prozesskammergehäuse aufweist, welches an die Lochplatte anschließt und zumindest einen Teil der Schneidanordnung umgibt und von einem Kühlmedium durchströmt ist gemäß dem Oberbegriff des Anspruchs 1, sowie ein Verfahren zur Herstellung von Granulatkörnern aus einer Kunststoffschmelze gemäß dem Oberbegriff des Anspruchs 15.

Generell werden zur Granulierung von thermoplastischem Kunststoffmaterial, wie z.B. Polyethylen oder Polypropylen, häufig Granuliervorrichtungen mit Extrudern eingesetzt, bei welchen das geschmolzene Kunststoffmaterial durch Düsenöffnungen einer Lochplatte in ein Kühlmedium, beispielsweise Wasser, gepresst wird und von einer Schneidanordnung, deren zumindest ein Messer die Öffnungen der Lochplatte unter Berührung des zumindest einen Messers überstreicht, dort abgetrennt wird, so dass Granulatkörner gebildet werden. Entsprechende Vorrichtungen zur Unterwassergranulierung sind als Anlagen z.B. unter der Produktbezeichnung SPHERO® vom Unternehmen Automatik Plastics Machinery GmbH bekannt.

Bei solchen Granuliervorrichtungen entsteht aufgrund der hohen Kräfte, mit welchen die Messeranordnung an die Lochplatte geführt wird, ein relativ hoher Verschleiß der Lochplatte, insbesondere im Bereich der Schmelzedüsen. Somit ist bei solchen Granuliervorrichtungen ein hoher Verschleißschutz wünschenswert, um zum einen den sicheren Betrieb einer entsprechenden Granuliervorrichtung zu gewährleisten und zum anderen auch möglichst lange Standzeiten zu ermöglichen. Auch eine genaue Positionierung der Schneidanordnung relativ zur bzw. an der Lochplatte ist zur Erzielung einer gleichmäßig guten Qualität der Granulierung und der dabei entstehenden Granulatkörner wünschenswert.

Allerdings werden bei bisherigen Granuliervorrichtungen des Standes der Technik die Schneidanordnungen gewöhnlich unter Ausnutzung eines Signals, gewonnen über die Erfassung der Andrückkraft davon gegen die Lochplatte, positioniert, so dass es dabei noch zu relativ hohem Verschleiß der Lochplatte kommen kann.

Ein Verfahren des Standes der Technik zum Ausrichten einer Messerwelle eines Granulators und ein solcher Granulator unter Ausnutzung einer auf die Messerwelle wirkenden Kraft sind beispielsweise aus der deutschen Offenlegungsschrift DE 10 2008 020 502 A1 bekannt.

Das Dokument US 2010/0043616 A1 beschreibt eine Granuliervorrichtung bei welcher über ein Sensorelement und einen zugeordneten Sensorarm die axiale Position einer Messerantriebswelle abgegriffen werden kann, sodass dann ein manuelles Nachstellen der Messerposition in axialer Richtung gegebenenfalls vorgenommen werden kann. Die Positionserfassung erfolgt dabei durch einfachen Abgriff.

Das Dokument JP-A-59123615 beschreibt eine Sensorvorrichtung, bei welcher Veränderungen eines Messerträgers relativ zu einer Lochplatte berührungslos über einen Sensor und über einen zugeordneten Impulsgeber bestimmt werden können, wobei der Impulsgeber im Bereich der Messerwelle angeordnet ist und der Positionssensor im Bereich eines Gehäuses angeordnet sein kann. Eine automatisierte Kombination aus Positionserfassungs- und Verstellungseinrichtung ist aus diesem Dokument nicht bekannt.

Das US-Patent US 4,529,370 beschreibt die Ausführung einer Verstelleinrichtung im Bereich einer Granuliervorrichtung.

Die Deutsche Offenlegungsschrift DE 35 41 500 A1 beschreibt eine Einrichtung zum Granulieren von thermoplastischen Kunststoffen, bei welcher über Tragarme eine Entkopplung von Temperaturbedingt bei einer solchen Vorrichtung auftretenden Längenänderungen erreicht werden soll.

Es ist die Aufgabe der vorliegenden Erfindung, eine Vorrichtung und ein Verfahren zur Herstellung von Granulatkörnern aus einer Schmelze vorzusehen, welche die Nachteile des Standes der Technik überwindet, und insbesondere eine Vorrichtung und ein Verfahren vorzusehen, welche(s) auf konstruktiv einfache Weise eine automatisierte und dabei zuverlässige und verschleißverringerte Granulierung ermöglicht.

Diese Aufgabe wird erfindungsgemäß mit einer Vorrichtung zur Herstellung von Granulatkörnern mit den Merkmalen gemäß dem Anspruch 1 sowie mit einem Verfahren zur Herstellung von Granulatkömem mit den Merkmalen gemäß dem Anspruch 14 gelöst.

Bevorzugte Ausführungsformen der Erfindung sind in den jeweiligen Unteranspruechen definiert.

Es handelt sich bei der erfindungsgemäßen Vorrichtung um eine Vorrichtung zur Herstellung von Granulatkörnern aus einer Schmelze, nämlich insbesondere beispielsweise einer Kunststoffschmelze. Die erfindungsgemäße Vorrichtung weist auf eine Lochplatte mit darin angeordneten Schmelzedüsen, aus welchen die Schmelze bzw. die Kunststoffschmelze austritt. Der Lochplatte liegt eine Schneidanordnung mit einem Messerkopf mit zumindest einem Messer und einer Messerwelle, angetrieben von einem Motor, gegenüber, so dass das zumindest eine Messer die Schmelzedüsen in der Lochplatte, bevorzugt kreisförmig angeordnet, umlaufend, nämlich ebenfalls bevorzugt kreisförmig umlaufend, überstreicht und dabei Granulatkörner des dort aus den Schmelzedüsen austretenden Kunststoffmaterials abtrennt. Das zumindest eine Messer überstreicht die Schmelzedüsen der Lochplatte dabei im entsprechenden Bereich entweder berührungslos oder unter Kontaktierung der entsprechenden Bereiche der Lochplatte, wobei allerdings die berührungslose Drehbewegung im Hinblick auf die erzielbare Verschleißvermeidung bevorzugter ist. Die Vorrichtung weist ferner ein Prozesskammergehäuse auf, welches an die Lochplatte anschließt und dabei zumindest einen Teil der Schneidanordnung umgibt, bevorzugt den Messerkopf und zumindest einen Abschnitt der Messerwelle, und von einem Kühlmedium, z.B. Wasser, durchströmt ist. Erfindungsgemäß ist die Messerwelle gegen das Prozesskammergehäuse über zumindest ein Verstelllager zumindest axial verschiebbar, wobei das Verstelllager bevorzugt entweder im Bereich des Prozesskammergehäuses oder im Bereich zwischen dem Prozesskammergehäuse und dem Motor bzw. dem entsprechenden Motorgehäuse angeordnet sein kann. Die Messerwelle kann gegenüber dem Verstelllager drehbar vorgesehen sein. Des Weiteren ist erfindungsgemäß eine Positionserfassungs- und - verstellungseinrichtung vorgesehen mit zumindest einem Positionssensor, angeordnet im Prozesskammergehäuse und/oder in der Lochplatte selbst, und mit zumindest einem Positionssensor-Impulsgeber, angeordnet im Bereich des Messerkopfs, mittels welchen die Position des zumindest einen Messers zur Lochplatte mit den daran befindlichen Schmelzedüsen bestimmbar ist, und mit einer Aktuatoreinrichtung, durch welche die Position des zumindest einen Messers entsprechend einstellbar ist, insbesondere entsprechend der erfassten Daten der Positionserfassung über den zumindest einen Positionssensor und den zumindest einen Positionssensor-Impulsgeber.

Erfindungsgemäß ist also die Lage des zumindest einen Messers der Schneidanordnung zur Lochplatte nicht über eine Kraftmessung, wie im Stand der Technik, realisiert, sondern über die erfindungsgemäße Positionserfassungsvorrichtung mit dem zumindest einen Positionssensor und dem zumindest einen Positionssensor-Impulsgeber. Dabei kann die erfindungsgemäße Positionserfassungsvorrichtung dynamisch und/oder in Echtzeit unmittelbar während des Betriebs der erfindungsgemäßen Vorrichtung die Lage des zumindest einen Messers der Schneidanordnung bezüglich der Lochplatte bestimmen und im Betrieb kann auf Grundlage dieser Bestimmung der entsprechenden Positionierung über die erfindungsgemäße Verstelleinrichtung eine Einstellung der Position erfolgen. Insbesondere ist es dabei möglich, dass die Position so eingestellt wird, dass ein gewisser Spalt zwischen dem zumindest einen Messer und der Lochplatte eingehalten ist und bei Bedarf im Betrieb immer wieder einstellbar ist, ohne dass, wie im Fall einer Kraftmessung des Standes der Technik ein Anliegen des Messers an der Lochplatte erfolgen muss und somit ein potenziell erhöhter Verschleiß erfolgen muss. Gleichwohl kann natürlich auch mit der erfindungsgemäßen Positionserfassungs- und - Verstelleinrichtung ein Betrieb der erfindungsgemäßen Granuliervorrichtung durchgeführt werden, bei welchem das zumindest eine Messer der Schneidanordnung leicht, d.h. bevorzugt kraftlos, an der Lochplatte anliegend umlaufend geführt ist. Es ergibt sich somit jedenfalls eine sehr flexible und falls gewünscht besonders verschleißarme Möglichkeit der Granulierung mit der erfindungsgemäßen Vorrichtung.

Eine besonders flexible Verstellbarkeit der Position des zumindest einen Messers der Schneidanordnung gegenüber der Lochplatte ist erfindungsgemäß bevorzugt dadurch realisierbar, dass die Messerwelle gegen das Prozesskammergehäuse über das zumindest eine Verstelllager nicht nur axial verschiebbar ist, sondern (auch) radial bevorzugt auf einer entsprechenden Kugelfläche im Raum verschwenkbar ist und mittels der Aktuatoreinrichtung die Position des zumindest einen Messers entsprechend einstellbar ist. Somit können gegebenenfalls vorhandene Schrägstellungen zwischen der Schneidanordnung mit dem zumindest einen Messer und der Lochplatte erfindungsgemäß besonders leicht ausgeglichen werden. Es kommt somit nicht zu (abschnittsweise) erhöhten Kräften, welche zwischen der Schneidanordnung und der Lochplatte ansonsten bei entsprechender Schrägstellung dieser Elemente zueinander auftreten könnten. Dies kann erfindungsgemäß mit der bevorzugten Ausführungsform der Erfindung sicher vermieden werden.

Bevorzugt kann das zumindest eine Messer der Schneidanordnung in einer Ebene mit konstantem Abstand von der Lochplatte umlaufend angeordnet einstellbar sein, wobei der Abstand bevorzugt je nach zu granulierendem Material beispielsweise in einem Bereich von 0,04 mm bis 0,3 mm, bevorzugter in einem Bereich von 0,04 mm bis 0,1 mm oder bevorzugter in einem Bereich von 0,1 mm bis 0,3 mm liegen kann. Auf diese Weise ist auf flexible Art und Weise je nach zu granulierendem Material eine optimale Granulationswirkung möglich, ohne dass es zu einer Berührung des zumindest einen Messers der Schneidanordnung mit der Lochplatte kommen muss, was auch den Verschleiß weiter besonders effektiv erfindungsgemäß verringern kann. Wie erwähnt, kann aufgrund der erfindungsgemäßen Positionserfassungs- und Verstellungseinrichtung auch eine umlaufende Bewegungsebene des zumindest einen Messers der Schneidanordnung vorgesehen und einstellbar sein, bei welcher das zumindest eine Messer kraftlos aber dabei anliegend an der Lochplatte umlaufend geführt ist.

Um besonders einfach und zuverlässig eine einfache Positionierung und Lagebestimmung der bevorzugten Position des Umlaufs der Schneidanordnung bezüglich der Lochplatte zu gewährleisten, kann der Positionssensor zweiteilig ausgeführt sein, wobei dabei eine Vorzugsebene so definiert sein kann, dass diese entsprechend der Ausrichtung des Positionssensors zwischen dem ersten Sensorteil und dem zweiten Sensorteil verlaufend in einer Ebene bevorzugt beispielsweise parallel zur Lochplatte verlaufend vorgesehen sein kann.

Eine besonders einfache und zuverlässige Bestimmung der Position des zumindest einen Messers der Schneidanordnung kann auch dadurch gegeben sein, dass der zumindest eine Positionssensor-Impulsgeber im Bereich des zumindest einen Messers angeordnet ist. Insbesondere kann der zumindest eine Positionssensor-Impulsgeber an dem zumindest einen Messer entsprechend befestigt sein. Es können auch jeweils einzelne (individuelle) Positionssensor-Impulsgeber jeweils an einzelnen Messern einer Schneidanordnung mit mehreren Messern angeordnet sein. Die Anordnung bzw. unmittelbare Befestigung an den Messern macht die Positionserfassung erfindungsgemäß besonders zuverlässig möglich.

Um bei einem möglichen Austausch von Messern, beispielsweise bei einem erforderlichen Messer- und somit Schneidgeometriewechsel im Falle einer Änderung des zu granulierenden Materials oder im Falle des Erreichens der Verschleißgrenze, die Servicefreundlichkeit weiter zu erhöhen und zu vermeiden, dass dadurch auch die Positionssensor-Impulsgeber ausgetauscht werden müssen, kann gemäß einer bevorzugten Ausführungsform der Messerkopf einen Messerhalter aufweisen, so dass daran das zumindest eine Messer auswechselbar gehalten ist, wobei der zumindest eine Positionssensor-Impulsgeber im Bereich des Messerhalters angeordnet ist.

Gemäß einer bevorzugten Ausführungsform kann der Positionssensor auch im Bereich der Lochplatte, bevorzugt im Bereich der Lochplatte radial innerhalb der bevorzugt kreisförmig angeordneten Schmelzedüsen, angeordnet sein. Dies erlaubt eine einfache axiale Ausrichtung des zumindest einen Messers des Messerkopfs bezüglich der Lochplatte.

Bevorzugt kann der Positionssensor auch im Bereich des Prozesskammergehäuses angeordnet sein. Dies kann insbesondere die Ausrichtung der Drehebene des zumindest einen Messers der Schneidanordnung bezüglich der Lochplatte besonders einfach ermöglichen, da durch einen so angeordneten Positionssensor im Bereich des Prozesskammergehäuses radial außerhalb der Umlaufsbewegung der Schneidanordnung bereits auf einfache Weise eine Ebene der umlaufenden Drehbewegung der Schneidanordnung bzw. des zumindest einen Messers der Schneidanordnung definiert sein kann.

Um die zuverlässige Erfassung der Position der Schneidanordnung bzw. des zumindest einen Messers der Schneidanordnung zur Lochplatte erfindungsgemäß besonders zuverlässig vorzusehen, kann zusätzlich zu dem zumindest einen Positionssensor-Impulsgeber zusätzlich ein Winkelpositionssensor der Motorwelle bzw. der Schneidanordnung zugeordnet sein. Somit ist es möglich, auch bei Schrägstellung der Ebene der umlaufenden Bewegung des zumindest einen Messers im Bereich des Messerkopfs der Schneidanordnung eine Erfassung der Schrägstellung zu gewährleisten und somit die entsprechende Einstellbarkeit der Parallelität von der Ebene dieser Bewegung zur Lochplatte so weiter besonders einfach zu gestalten.

Zweckmäßig kann die Positionserfassungsvorrichtung der Erfindung bevorzugt so ausgebildet sein, dass der Positionssensor und der zumindest eine Positionssensor-Impulsgeber so ausgebildet sind, dass sie ein optisches Laser-Positionserfassungssystem bilden. Dabei kann der Positionssensor als Laser ausgeführt sein bzw. als Laseroptik und der Positionssensor-Impulsgeber als Reflexionsfläche, welche entsprechende Laserstrahlen zum Positionssensor mit einer Erfassungsvorrichtung zurückwirft.

Es kann auch zweckmäßig sein, dass der Positionssensor und der zumindest eine Positionssensor-Impulsgeber so ausgebildet sind, dass sie ein induktives Positionserfassungssystem bilden. Dies kann von besonderem Vorteil sein, wenn beispielsweise durch entsprechende räumliche Anordnung ein optisches System beispielsweise durch störende Granulatkörner nicht zufriedenstellend arbeiten könnte. Auch kann zweckmäßigerweise der Positionssensor und der zumindest eine Positionssensor-Impulsgeber so ausgebildet sein, dass sie ein kapazitives Positionserfassungssystem bilden.

Um die Ebene der Bewegung des zumindest einen Messers im Bereich des Messerkopfs der Schneidanordnung bzw. die Ebene der Bewegung der Schneidanordnung zuverlässig bestimmbar zu machen, können zumindest drei Positionssensor-Impulsgeber vorgesehen sein. Diese drei Positionssensor-Impulsgeber definieren durch ihre Lage eindeutig eine entsprechende Ebene.

Um die Positionierung zu erleichtern und um die Ausrichtung aufgrund der Signale der erfindungsgemäßen Positionserfassungseinrichtung durch die Positionsverstelleinrichtung erfindungsgemäß zu vereinfachen, können die zumindest drei Positionssensor-Impulsgeber jeweils individuell codiert sein. Dadurch kann eine Schrägstellung der Ebene der umlaufenden Bewegung des zumindest einen Messers des Messerkopfs der Schneidanordnung realisierbar sein.

Bevorzugt kann die Aktuatoreinrichtung der erfindungsgemäßen Positionserfassungs- und - verstelleinrichtung ein Verstellgetriebe aufweisen, bevorzugt ein zweiachsiges Verstellgetriebe, besonders bevorzugt mit Feingewinde-Zahnstange(n) oder einen Stirnrad-Antrieb. Die Achsen des Verstellgetriebes können dabei bevorzugt senkrecht zueinander stehen, so dass eine Verstellung in axialer Richtung und/oder in radialer Richtung entsprechend möglich ist. Eine Aktuatoreinrichtung insbesondere bevorzugt der angegebenen Art, kann dabei bevorzugt an einem Abschnitt des Prozesskammergehäuses angeordnet sein, welcher vom Bereich der Lochplatte gegenüberliegend beabstandet ist und besonders bevorzugt kann die Aktuatoreinrichtung dabei beispielsweise auch zwischen dem Motor bzw. dem Motorgehäuse und dem Prozesskammergehäuse entsprechend angeordnet sein.

Um die Stabilität der Schneidanordnung hinsichtlich der einzustellenden Position zur Lochplatte weiter zu erhöhen, und um insbesondere dabei mögliche Verwindungen und Biegebeanspruchungen im Betrieb zu minimieren, kann die Messerwelle bevorzugt zumindest in einem Bereich davon, bevorzugt in einem Bereich davon, welcher der Lochplatte zugewandt ist, besonders bevorzugt in einem Bereich von bis zu 30 % der Länge der Messerwelle dort, über eine Messerwellenhalterung zusätzlich abgestützt sein.

Bevorzugt kann, um die Lagerung der Messerwelle entsprechend besonders einfach zu gestalten, das erfindungsgemäße Verstelllager zwischen einem Endbereich des Prozesskammergehäuses und der Messerwellenhalterung angeordnet sein. Die Verstellbarkeit über die Verstellungseinrichtung mit der entsprechenden Aktuatoreinrichtung (auch wie oben beschrieben) kann dabei auch entsprechend zwischen dem Prozesskammergehäuse bzw. einem entsprechenden Abschnitt davon, und der Messerwellenhalterung angeordnet sein.

Um beispielsweise im Servicefall oder bei Erstmontage der erfindungsgemäßen Vorrichtung eine einfache Einstellung der Parallelität der Ebene der umlaufenden Bewegung des Messerkopfs mit dem zumindest einen Messer der Schneidanordnung bezüglich der Lochplatte zu erreichen, kann im Bereich der Lochplatte bevorzugt eine Abdreh-Anlagefläche zum Abdrehen des zumindest einen Messers im Fall des Anliegens des zumindest einen Messers an der Abdreh-Anlagefläche vorgesehen sein, wobei bevorzugt die Lochplatte selbst als solche Abdreh-Anlagefläche ausgebildet ist, bzw. zumindest ein Teil der Lochplatte als solche Abdreh-Anlagefläche ausgebildet ist. Die Abdreh-Anlagefläche kann dabei bevorzugt ringförmig ausgebildet sein in dem Bereich, welcher umlaufend von dem zumindest einen Messer der Schneidanordnung überstrichen wird.

Besonders flexibel kann die erfindungsgemäße Vorrichtung zur Herstellung von Granulatkömem eingesetzt werden, wenn die Vorrichtung bevorzugt als Ganzes über eine Aufhängung an einer Laufschiene einhängbar und axial verschiebbar ist, wobei die Aufhängung an einem Gehäuse des Motors und/oder an dem Prozesskammergehäuse vorgesehen sein kann.

Im Folgenden wird noch das mit der erfindungsgemäßen Vorrichtung ausführbare erfindungsgemäße Verfahren zur Herstellung von Granulatkörnern aus einer Schmelze, bevorzugt einer Kunststoffschmelze, beschrieben werden.

Bei dem erfindungsgemäßen Verfahren zur Herstellung von Granulatkömem aus einer Schmelze, bevorzugt einer Kunststoffschmelze, wird die Schmelze aus Schmelzedüsen, angeordnet in einer Lochplatte, in ein Prozesskammergehäuse austreten. Das Prozesskammergehäuse schließt dabei an die Lochplatte an und umgibt zumindest einen Teil einer Schneidanordnung mit einem Messerkopf mit zumindest einem Messer und einer Messerwelle, angetrieben von einem Motor, gegenüberliegend der Lochplatte. Mit dem umlaufenden Messer der Messeranordnung werden von der aus den Schmelzedüsen austretenden Schmelze Granulatkörner abgetrennt. Beim erfindungsgemäßen Verfahren wird die Messerwelle gegen das Prozesskammergehäuse über zumindest ein Verstelllager zumindest axial verschiebbar gelagert und es ist eine erfindungsgemäße Positionserfassungs- und Positionsverstellungseinrichtung vorgesehen, mit zumindest einem Positionssensor, angeordnet im Prozesskammergehäuse und/oder der Lochplatte, und mit zumindest einem Positionssensor-Impulsgeber, angeordnet im Bereich des Messerkopfs, mittels welchen die Position des zumindest einen Messers zur Lochplatte mit den darin befindlichen Schmelzedüsen bestimmt wird, und mit einer Aktuatoreinrichtung, durch welche die Position des zumindest einen Messers entsprechend der bestimmten Werte der Positionserfassungseinrichtung eingestellt wird.

Somit ist auf einfache Weise eine rein über die eine Positionsbestimmung und einen entsprechenden Abgleich zwischen einer Ist-Position und einer Soll-Position mit entsprechender Nachführbewegung eine Positionierung der Bewegungsebene des umlaufenden zumindest einen Messers der Schneidanordnung bezüglich der Lochplatte einfach und zuverlässig möglich, wodurch auch der Granuliervorgang einfach steuerbar ist und die Qualität der Granulatkörner verbessert werden kann. Auch der Verschleiß der Lochplatte bzw. des zumindest einen Messers der Schneidanordnung kann somit einfach verringert werden, da nicht zwingend (größere) Kräfte zwischen dem zumindest einen Messer der Schneidanordnung und der Lochplatte auftreten müssen, wie dies bei der Kraftmessung zwischen Messer und Lochplatte gemäß dem Stand der Technik sonst zwingend erforderlich ist.

Besonders flexibel ist das erfindungsgemäße Verfahren bevorzugt dann, wenn die Messerwelle gegen das Prozesskammergehäuse über das zumindest eine Verstelllager auch radial bevorzugt auf einer entsprechenden Kugelfläche im Raum verschwenkbar ist und mittels der Aktuatoreinrichtung die Position des zumindest einen Messers entsprechend eingestellt wird.

Wie bereits weiter oben erwähnt, ist es erfindungsgemäß bevorzugt, dass das zumindest eine Messer in einer Ebene mit konstantem Abstand von der Lochplatte umlaufend angeordnet eingestellt wird, wobei der Abstand bevorzugt in einem Bereich von 0,04 mm bis 0,3 mm, bevorzugter in einem Bereich von 0,04 mm bis 0,1 mm oder bevorzugter in einem Bereich von 0,1 mm bis 0,3 mm liegt, abhängig von dem zu granulierenden Material und den sonstigen Granulierumständen, wie etwa Temperatur der Schmelze, Viskosität der Schmelze, Druck des Prozessfluids in der Prozesskammer usw. So kann beispielsweise zweckmäßig bei der Granulierung von niedrigviskosem Kunststoffmaterial der Abstand kleiner eingestellt werden als bei der Granulierung von Kunststoffmaterial mit höherer Viskosität oder bei Kunststoffmaterial, welches zusätzliche Füllstoffe enthält.

Das erfindungsgemäße Verfahren kann so bevorzugt durchgeführt werden, dass zunächst die Ausrichtung der Position des zumindest einen Messers bzw. der entsprechenden Schneidanordnung in einer Ebene in Umlaufrichtung parallel zur Lochplatte erfolgt und in der Folge je nach erfasster Situation dann lediglich eine axiale Einstellung, bevorzugt eine axiale Einstellung eines vordefinierten Abstands der Ebene von der Lochplatte, erfolgt. Dies ist besonders einfach, da die parallele Ausrichtung noch vor dem eigentlichen Regelbetrieb der Vorrichtung vorgenommen werden kann und dann im Betrieb lediglich eine (einfachere) axiale Verstellung der Position der schon parallel ausgerichteten Bewegungsebene des zumindest einen Messers zur Lochplatte erfolgen muss und nicht noch zusätzlich eine Verschwenkbewegung, welche allerdings, wie oben beschrieben, durchaus erfindungsgemäß auch möglich sein kann.

Im Fall der zunächst bevorzugt zu erfolgenden parallelen Ausrichtung der Position des zumindest einen Messers in einer Ebene in Umlaufrichtung parallel zur Lochplatte kann dies bevorzugt in einer solchen Weise erfolgen, dass der Messerkopf mit dem zumindest einen Messer zunächst an die Lochplatte gefahren wird und dort entweder durch Verschwenken oder durch Abdrehen des zumindest einen Messers an einer Abdreh-Anlagefläche der Lochplatte entsprechend ausgerichtet wird.

Die Positionseinstellung über Betrieb kann mit dem erfindungsgemäßen Verfahren bevorzugt so durchgeführt werden, dass die Position des zumindest einen Messers oszillierend, z.B. in einer Art Pendelbewegung, zwischen zwei Positionen eingestellt wird, bevorzugt oszillierend in axialer Richtung zwischen einer ersten Endposition näher an der Lochplatte und einer zweiten Endposition entfernter von der Lochplatte. Eine solche oszillierende Hin- und Herbewegung ist besonders einfach regelbar und erlaubt eine einfache Positionierung. Die Endpositionen können dabei in axialer Richtung beispielsweise bevorzugt zwischen 0,04 mm und 0,3 mm auseinander liegend variieren.

Die im Zusammenhang mit dem erfindungsgemäßen Verfahren beschriebenen Merkmale und Eigenschaften gelten, soweit anwendbar, auch bezüglich der erfindungsgemäßen Vorrichtung, und umgekehrt.

Die Erfindung wird im Folgenden anhand der beispielhaft erläuterten Ausführungsformen näher beschrieben werden. In den Figuren zeigt:
- Fig. 1: eine schematische Längsschnittansicht eines Ausschnitts einer Vorrichtung zur Herstellung von Granulatkörnern gemäß einer ersten bevorzugten Ausführungsform der Erfindung;
- Fig. 2: eine schematische Längsschnittansicht eines Ausschnitts einer Vorrichtung zur Herstellung von Granulatkörnern gemäß einer zweiten bevorzugten Ausführungsform der Erfindung;
- Fig. 3: eine schematische, teilweise quer geschnittene Ansicht eines Ausschnitts einer Vorrichtung zur Herstellung von Granulatkörnern gemäß der ersten Ausführungsform der Erfindung, gesehen von der Lochplatte her; und
- Fig. 4: eine schematische, teilweise quer geschnittene Ansicht eines Ausschnitts einer Vorrichtung zur Herstellung von Granulatkörnern gemäß der zweiten Ausführungsform der Erfindung, gesehen von der Lochplatte her.

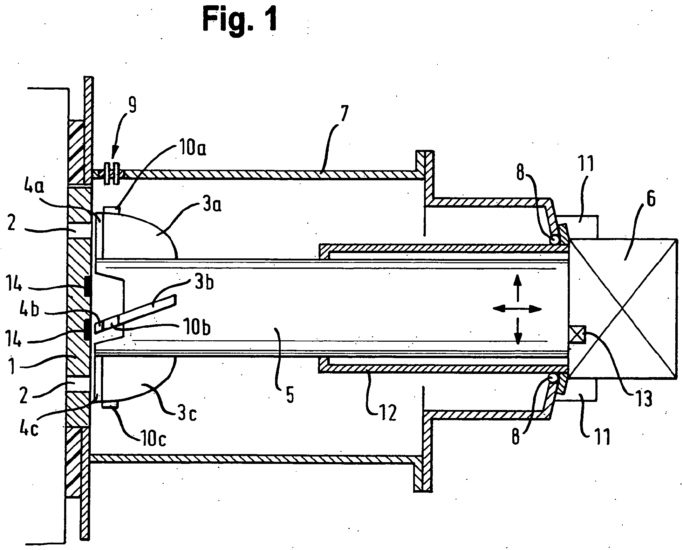

Die Fig. 1 zeigt in einer schematischen Längsschnittansicht einen Ausschnitt einer Vorrichtung zur Herstellung von Granulatkömem aus einer Schmelze, bevorzugt einer Kunststoffschmelze, gemäß einer ersten bevorzugten Ausführungsform der Erfindung. Die Vorrichtung weist auf eine Lochplatte 1 mit darin angeordneten Schmelzedüsen 2, welche dort kreisförmig angeordnet sein können. Die Schmelze tritt aus den Schmelzedüsen 2 aus. Der Lochplatte 1 ist eine Schneidanordnung mit einem Messerkopf mit zumindest einem Messer, im Fall der gezeigten Ausführungsform mit vier Messern 4a, 4b, 4c, 4d (Position 4d in der Figur 1 nicht zu sehen), angebracht an Messerhaltern 3a, 3b, 3c, 3d (Position 3d in der Figur 1 nicht zu sehen) des Messerkopfs, und einer Messerwelle 5, angetrieben von einem Motor 6, gegenüberliegend angeordnet, so dass die Messer 4a, 4b, 4c, 4d die Schmelzedüsen 2 in der Lochplatte 1 umlaufend überstreichen und dabei im Betrieb Granulatkörner der dort austretenden Schmelze abtrennen. Die Vorrichtung weist ein Prozesskammergehäuse 7 auf, welches an die Lochplatte 1 anschließt und, wie im Fall der Fig. 1 gezeigt, im hinteren Bereich einen zusätzlichen Abschnitt aufweist, an welchen der Motor 6 bzw. das Gehäuse des Motors 6 anschließt. Das Prozesskammergehäuse 7 umgibt dabei zumindest einen Teil der Schneidanordnung und wird von einem Kühlmedium durchströmt.

Erfindungsgemäß ist zumindest ein Verstelllager 8 vorgesehen, über welches die Messerwelle 5 gegen das Prozesskammergehäuse 7 zumindest axial verschiebbar ist. Das Verstelllager 8 kann als Kugellager umlaufend kreisförmig beispielsweise im hinteren Abschnitt des Prozesskammergehäuses 7, abgewandt vom Bereich der Lochplatte 1 angeordnet sein, wie dies in Fig. 1 gezeigt ist. Wie ebenfalls in Fig. 1 gezeigt, kann die Messerwelle 5 gegen das Prozesskammergehäuse 7 über das zumindest eine Verstelllager 8 auch radial verschwenkbar sein. Die Verstellmöglichkeiten über das Verstelllager 8 sind durch die Pfeile in Fig. 1 angedeutet. In der Ausführungsform, wie sie in der Fig. 1 gezeigt ist, ist die Messerwelle 5 über eine Messerwellenhalterung 12 zusätzlich abgestützt, wobei die Messerwellenhalterung 12 die Messerwelle 5 in einem vorderen Bereich, der Lochplatte 1 zugewandt, zusätzlich abstützt. Die Messerwellenhalterung 12 ist dabei als zusätzliche Hülse entsprechend ausgeführt. Die Messerwellenhalterung 12 ist in der Ausführungsform der Fig. 1 gegenüber dem Prozesskammergehäuse 7 nicht drehbar ausgeführt. Es kann auch eine Ausführungsform denkbar sein, bei welcher die zusätzliche Messerwellenhalterung 12 auch gegenüber dem Prozesskammergehäuse 7, nicht aber gegenüber der Messerwelle 5, drehbar ausgeführt sein kann. Die Messerwellenhalterung 12 könnte dabei auch ein Teil der Positioniereinrichtung sein, so dass dann beispielsweise eine Verschiebung der Messerwelle 5 in axialer Richtung relativ zu der drehfest oder drehbar mit der Messerwelle 5 vorgesehenen Messerwellenhalterung 12 erfolgen könnte.

Erfindungsgemäß ist eine Positionserfassungs- und -verstellungseinrichtung vorgesehen, mit einem Positionssensor 9, angeordnet im Prozesskammergehäuse 7, und Positionssensor-Impulsgebern 10a, 10b, 10c, 10d (Position 10d in der Figur 1 nicht zu sehen), angeordnet im Bereich des Messerkopfs, im Fall der Ausführungsform der Fig. 1 angeordnet an Messerhaltern 3a, 3b, 3c, 3d, an welchen die Messer 4a, 4b, 4c, 4d jeweils auswechselbar gehalten sind. Der Positionssensor 9 ist als zweiteiliger Positionssensor 9 ausgeführt und definiert zwischen den beiden Sensorteilen so eine parallel zur Lochplatte 1 verlaufende Soll-Positionsebene. Mittels des Positionssensors 9 und der Positionssensor-Impulsgeber 10a, 10b, 10c, 10d ist die Position der Messer 4a, 4b, 4c, 4d zur Lochplatte 1 mit den darin befindlichen Schmelzedüsen 2 bestimmbar, und über eine Aktuatoreinrichtung 11 kann in Abhängigkeit der bestimmten Werte der Positionserfassungseinrichtung die Position der Messer 4a, 4b, 4c, 4d entsprechend in einer Ebene parallel zur Ebene der Lochplatte 1 in einem Vergleich zwischen dem Soll-Wert und dem Ist-Wert nachgeregelt und eingestellt werden. Die Aktuatoreinrichtung 11 kann dabei als ein Verstellgetriebe ausgeführt sein, welches im Bereich des Prozesskammergehäuses 7, abgewandt von der Lochplatte 1, angeordnet sein kann, bevorzugt im Bereich zwischen dem Prozesskammergehäuse 7 und dem Motor 6 bzw. dem Gehäuse des Motors 6. Zur Vereinfachung der Positionsbestimmung kann zusätzlich, wie in Fig. 1 gezeigt, ein Winkelpositionssensor 13 vorgesehen sein, welcher bevorzugt der Motorwelle 5 zugeordnet sein kann.

Wie in der Ausführungsform der Fig. 1 gezeigt, kann im Bereich der Lochplatte 1 eine bevorzugt umlaufend kreisförmig angeordnete Abdreh-Anlagefläche 14 zum Abdrehen der Messer 4a, 4b, 4c, 4d an dieser Abdreh-Anlagefläche 14 vorgesehen sein. Diese Abdreh-Anlagefläche 14 kann aus besonders hartem Material, beispielsweise aus Korund-Material bestehen bzw. durch eine dort vorgesehene Beschichtung der Lochplatte 1 vorgesehen sein. So kann die Ausrichtung der Position der Messer 4a, 4b, 4c, 4d in einer Ebene in Umfangsrichtung parallel zur Lochplatte 1 in einer solchen Weise erfolgen, dass der Messerkopf mit den Messern zunächst an die Lochplatte gefahren wird und dort entweder durch Abdrehen der Messer an der Abdreh-Anlagefläche 14 der Lochplatte 1 entsprechend ausgerichtet wird. Auch ein entsprechendes Verschwenken wäre dabei möglich.

Im Betriebszustand der erfindungsgemäßen Vorrichtung, wie er in der Fig. 1 dargestellt ist, wird der Abstand der Umlaufsebene der Messer zur Lochplatte 1 beispielsweise je nach zu granulierendem Material in einem Bereich von 0,04 mm bis 0,3 mm gehalten. Es findet also eine exakte Positionierung entsprechend statt, ohne dass die Messer die Lochplatte 1 im Betrieb berühren müssen und ohne dass also eine Verschleiß auslösende Anpresskraft zwischen Messer und Lochplatte 1 auftritt.

Im Folgenden beschreiben in den weiteren Figuren gleiche Bezugszeichen die gleichen Elemente der Erfindung. Soweit anwendbar, gelten die zu den jeweiligen Figuren und den jeweiligen Elementen gemachten Aussagen dabei entsprechend auch für die jeweils übrigen Figuren.

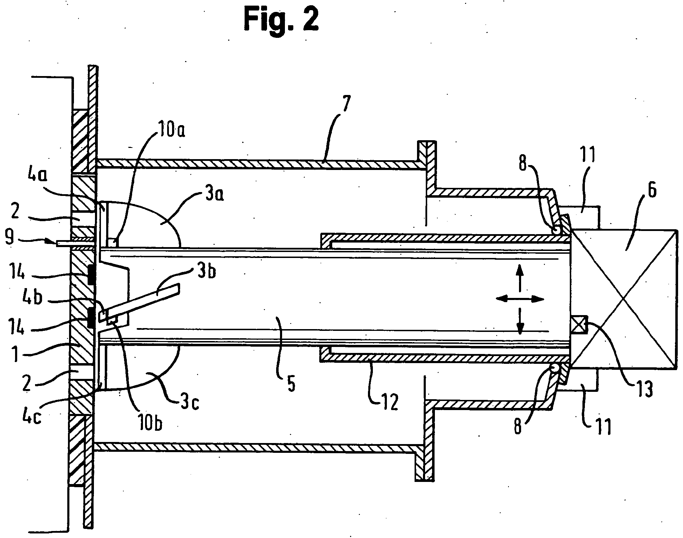

Die Fig. 2 zeigt eine schematische Schnittansicht eines Ausschnitts einer Vorrichtung zur Herstellung von Granulatkörnern gemäß einer zweiten bevorzugten Ausführungsform der Erfindung. Die Ausführungsform gemäß Fig. 2 unterscheidet sich von der Ausführungsform gemäß Fig. 1 darin, dass der Positionssensor 9 einteilig ausgeführt ist und im Bereich der Lochplatte 1 angeordnet ist, wobei gemäß der in Fig. 2 gezeigten Ausführungsform der Erfindung der Positionssensor 9 radial innerhalb der kreisförmig angeordneten Schmelzedüsen 2 der Lochplatte 1 angeordnet ist. Ansonsten entspricht die Ausführungsform gemäß der Darstellung der Fig. 2 der in Fig. 1 gezeigten Ausführungsform.

Sowohl in der Ausführungsform gemäß Fig. 1 als auch in der Ausführungsform gemäß Fig. 2 sind die Positionssensor-Impulsgeber 10a, 10b, 10c, 10d jeweils an den Messerhaltern 3a, 3b, 3c, 3d des Messerkopfs angebracht. Die Ausführungsform gemäß Fig. 2 unterscheidet sich dabei von der Ausführungsform der Fig. 1 lediglich dadurch, dass die Anordnung der Positionssensor-Impulsgeber jeweils im Bereich näher an der Messerwelle entsprechend der Position des gegenüberliegenden Positionssensors 9 in der Lochplatte angeordnet sind, wohingegen in der Ausführungsform gemäß Fig. 1 die Positionssensor-Impulsgeber jeweils im radial äußeren Bereich der Messerhalter näher an dem im Prozesskammergehäuse 7 angeordneten Positionssensor 9 angeordnet sind.

Der Positionssensor 9 und die Positionssensor-Impulsgeber 10a, 10b, 10c, 10d gemäß den Darstellungen der Figur 1 und der Figur 2 können so ausgebildet sein, dass sie ein optisches Laser-Positionserfassungssystem bilden. Sie können auch so ausgebildet sein, dass sie ein induktives Positionserfassungssystem bilden. Sie können auch so ausgebildet sein, dass sie ein kapazitives Positionserfassungssystem bilden.

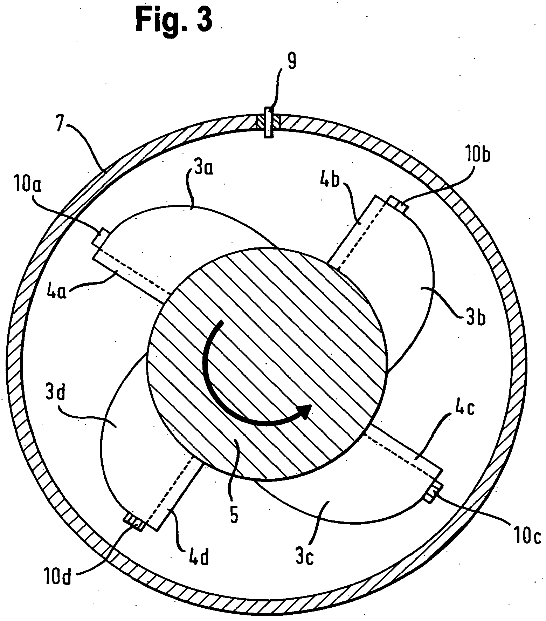

Die Fig. 3 zeigt schematisch eine teilweise quer geschnittene Ansicht eines Ausschnitts einer Vorrichtung zur Herstellung von Granulatkörnern gemäß der ersten Ausführungsform der Erfindung, gesehen von der Lochplatte her. Siehe dazu auch die entsprechende Darstellung der ersten bevorzugten Ausführungsform der Erfindung gemäß Fig. 1. Wie in Fig. 3 leicht zu erkennen, ist der Positionssensor 9 in das Prozesskammergehäuse 7 eingelassen und die Positionssensor-Impulsgeber 10a, 10b, 10c, 10d sind jeweils an jeweiligen Messerhaltern 3a, 3b, 3c, 3d, welche die Messer 4a, 4b, 4c, 4d auswechselbar haltern, angebracht. Die jeweiligen Positionssensor-Impulsgeber 10a, 10b, 10c, 10d sind, wie in Fig. 3 angedeutet, jeweils individuell codiert (einfach, zweifach, dreifach, vierfach). Somit ist eine individuelle Positionserfassung möglich und somit eine genaue Bestimmung der Lage der Ebene der umlaufenden Drehbewegung des Messerkopfs der entsprechenden Schneidanordnung.

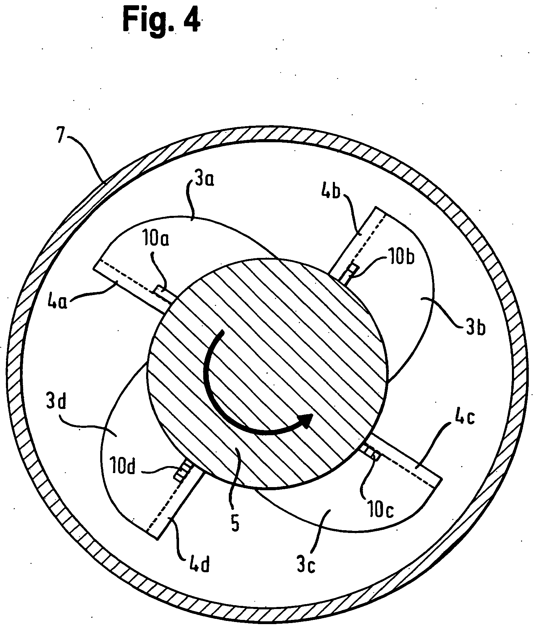

Fig. 4 zeigt schematisch eine teilweise quergeschnittene Ansicht eines Ausschnitts einer Vorrichtung zur Herstellung von Granulatkörnern gemäß der zweiten Ausführungsform der Erfindung, gesehen von der Lochplatte her. Die Darstellung gemäß Fig. 4 unterscheidet sich von der Darstellung gemäß Fig. 3 lediglich dadurch, dass gemäß der Darstellung der Fig. 4 die Positionssensor-Impulsgeber 10a, 10b, 10c, 10d näher an der Messerwelle 5 angeordnet sind, da die jeweiligen Positionssensor-Impulsgeber bei dieser Ausführungsform mit einem Positionssensor 9, angeordnet in der Lochplatte 1, zusammenwirken. Siehe dazu auch die entsprechende Darstellung der zweiten bevorzugten Ausführungsform der Erfindung gemäß Fig. 2.

Mit der erfindungsgemäßen Vorrichtung ist auch die Durchführung des erfindungsgemäßen Verfahrens möglich. Es bietet sich somit die Möglichkeit, auf konstruktiv einfache Weise eine automatisierte und dabei zuverlässige verschleißverringerte Granulierung zu ermöglichen.

## Patentansprüche

1. Vorrichtung zur Herstellung von Granulatkömem aus einer Schmelze, mit einer Lochplatte (1) mit darin angeordneten Schmelzedüsen (2), aus welchen die Schmelze austritt, wobei der Lochplatte (1) eine Schneidanordnung mit einem Messerkopf mit zumindest einem Messer (4a, 4b, 4c, 4d), und einer Messerwelle (5), angetrieben von einem Motor (6), gegenüberliegt, so dass das zumindest eine Messer (4a, 4b, 4c, 4d) die Schmelzedüsen (2) in der Lochplatte (1) umlaufend überstreicht und dabei Granulatkörner des dort austretenden Schmelzematerials abtrennt, wobei die Vorrichtung ein Prozesskammergehäuse (7) aufweist, welches an die Lochplatte (1) anschließt und zumindest einen Teil der Schneidanordnung umgibt und von einem Kühlmedium durchströmt ist, wobei die Messerwelle (5) gegen das Prozesskammergehäuse (7) über zumindest ein Verstelllager (8) zumindest axial verschiebbar ist, und wobei eine Positionserfassungs- und -Verstellungseinrichtung vorgesehen ist, mit zumindest einem Positionssensor (9), angeordnet im Prozesskammergehäuse (7) und/oder in der Lochplatte (1), und zumindest einem Positionssensor-Impulsgeber (10a, 10b, 10c, 10d), angeordnet im Bereich des Messerkopfs, mittels welchen die Position des zumindest einen Messers (4a, 4b, 4c, 4d) zur Lochplatte (1) mit den darin befindlichen Schmelzedüsen (2) bestimmbar ist, und mit einer Aktuatoreinrichtung (11), durch welche die Position des zumindest einen Messers (4a, 4b, 4c, 4d) entsprechend einstellbar ist,
**dadurch gekennzeichnet, dass**
die Messerwelle (5) gegen das Prozesskammergehäuse (7) über das zumindest ein Verstelllager (8) auch radial verschwenkbar ist und mittels der Aktuatoreinrichtung (11) die Position des zumindest einen Messers (4a, 4b, 4c, 4d) entsprechend einstellbar ist.

2. Vorrichtung nach Anspruch 1, **dadurch gekennzeichnet, dass** das zumindest eine Messer (4a, 4b, 4c, 4d) in einer Ebene mit konstantem Abstand von der Lochplatte (1) umlaufend angeordnet einstellbar ist, wobei der Abstand bevorzugt in einem Bereich von 0,04 mm bis 0,3 mm liegt.

3. Vorrichtung nach Anspruch 1 oder 2, **dadurch gekennzeichnet, dass** der zumindest eine Positionssensor-Impulsgeber (10a, 10b, 10c, 10d) im Bereich des zumindest einen Messers (4a, 4b, 4c, 4d) angeordnet ist.

4. Vorrichtung nach einem der Ansprüche 1 bis 3, **dadurch gekennzeichnet, dass** der Messerkopf einen Messerhalter (3a, 3b, 3c, 3d) aufweist, so dass daran das zumindest eine Messer (4a, 4b, 4c, 4d) auswechselbar gehalten ist, wobei der zumindest eine Positionssensor-Impulsgeber (10a, 10b, 10c, 10d) im Bereich des Messerhalters (3a, 3b, 3c, 3d) angeordnet ist.

5. Vorrichtung nach einem der Ansprüche 1 bis 4, **dadurch gekennzeichnet, dass** der Positionssensor (9) im Bereich der Lochplatte (1), bevorzugt im Bereich der Lochplatte (1) radial innerhalb der Schmelzedüsen (2), angeordnet ist.

6. Vorrichtung nach einem der Ansprüche 1 bis 4, **dadurch gekennzeichnet, dass** der Positionssensor (9) im Bereich des Prozesskammergehäuses (7) angeordnet ist.

7. Vorrichtung nach einem der Ansprüche 1 bis 6, **dadurch gekennzeichnet, dass** zusätzlich zu dem zumindest einen Positionssensor-Impulsgeber (10a, 10b, 10c, 10d) zusätzlich ein Winkelpositionssensor (13) der Motorwelle (5) zugeordnet ist.

8. Vorrichtung nach einem der Ansprüche 1 bis 7, **dadurch gekennzeichnet, dass** der Positionssensor (9) und der zumindest eine Positionssensor-Impulsgeber (10a, 10b, 10c, 10d) so ausgebildet sind, dass sie ein optisches Laser-Positionserfassungssystem und/oder ein induktives Positionserfassungssystem und/oder ein kapazitives Positionserfassungssystem bilden.

9. Vorrichtung nach einem der Ansprüche 1 bis 8, **dadurch gekennzeichnet, dass** zumindest drei Positionssensor-Impulsgeber (10a, 10b, 10c, 10d) vorgesehen sind, welche bevorzugt jeweils individuell codiert sind.

10. Vorrichtung nach einem der Ansprüche 1 bis 9, **dadurch gekennzeichnet, dass** die Aktuatoreinrichtung (11) ein Verstellgetriebe, bevorzugt ein zweiachsiges Verstellgetriebe, besonders bevorzugt mit Feingewinde-Zahnstange(n) oder einem Stirnrad-Antrieb, aufweist.

11. Vorrichtung nach einem der Ansprüche 1 bis 10, **dadurch gekennzeichnet, dass** die Messerwelle (5) zumindest in einem Bereich davon, bevorzugt in einem Bereich davon, welcher der Lochplatte (1) zugewandt ist, besonders bevorzugt in einem solchen Bereich von bis zu 30 % der Länge der Messerwelle (5), über eine Messerwellenhalterung (12) zusätzlich abgestützt ist, wobei besonders bevorzugt das Verstelllager (8) zwischen einem Endbereich des Prozesskammergehäuses (7) und der Messerwellenhalterung (12) angeordnet ist.

12. Vorrichtung nach einem der Ansprüche 1 bis 11, **dadurch gekennzeichnet, dass** im Bereich der Lochplatte (1) eine Abdreh-Anlagefläche (14) zum Abdrehen des zumindest einen Messers (4a, 4b, 4c, 4d), im Fall des Anliegens des zumindest einen Messers (4a, 4b, 4c, 4d) an der Abdreh-Anlagefläche (14), vorgesehen ist, wobei bevorzugt die Lochplatte (1) als solche Abdreh-Anlagefläche (14) ausgebildet ist.

13. Vorrichtung nach einem der Ansprüche 1 bis 12, **dadurch gekennzeichnet, dass** die Vorrichtung als Ganzes über eine Aufhängung an einer Laufschiene einhängbar und axial verschiebbar ist, wobei die Aufhängung an einem Gehäuse des Motors (6) und/oder an dem Prozesskammergehäuse (7) vorgesehen ist.

14. Verfahren zur Herstellung von Granulatkömem aus einer Schmelze, wobei die Schmelze aus Schmelzedüsen (2), angeordnet in einer Lochplatte (1), in ein Prozesskammergehäuse (7), welches an die Lochplatte (1) anschließt und zumindest einen Teil einer Schneidanordnung umgibt und von einem Kühlmedium durchströmt wird, austritt und dabei von einer Schneidanordnung mit einem Messerkopf mit zumindest einem Messer (4a, 4b, 4c, 4d), und einer Messerwelle (5), angetrieben von einem Motor (6), gegenüberliegend der Lochplatte (1), Granulatkörner abgetrennt werden, wobei die Messerwelle (5) gegen das Prozesskammergehäuse (7) über zumindest ein Verstelllager (8) zumindest axial verschiebbar ist, und wobei eine Positionserfassungs- und -Verstellungseinrichtung vorgesehen wird, mit zumindest einem Positionssensor (9), angeordnet im Prozesskammergehäuse (7) und/oder der Lochplatte (1), und zumindest einem Positionssensor-Impulsgeber (10a, 10b, 10c, 10d), angeordnet im Bereich des Messerkopfs, mittels welchen die Position des zumindest einen Messers (4a, 4b, 4c, 4d) zur Lochplatte (1) mit den darin befindlichen Schmelzedüsen (2) bestimmt wird, und mit einer Aktuatoreinrichtung (11), durch welche die Position des zumindest einen Messers (4a, 4b, 4c, 4d) entsprechend eingestellt wird,
**dadurch gekennzeichnet, dass**
die Messerwelle (5) gegen das Prozesskammergehäuse (7) über das zumindest ein Verstelllager (8) auch radial verschwenkbar ist und mittels der Aktuatoreinrichtung (11) die Position des zumindest einen Messers (4a, 4b, 4c, 4d) entsprechend eingestellt wird.

15. Verfahren nach Anspruch 14, **dadurch gekennzeichnet, dass** das zumindest eine Messer (4a, 4b, 4c, 4d) in einer Ebene mit konstantem Abstand von der Lochplatte (1) umlaufend angeordnet eingestellt wird, wobei der Abstand bevorzugt in einem Bereich von 0,04 mm bis 0,3 mm liegt.

16. Verfahren nach Anspruch 14 oder 15, **dadurch gekennzeichnet, dass** zunächst die Ausrichtung der Position des zumindest einen Messers (4a, 4b, 4c, 4d) in einer Ebene in Umlaufrichtung parallel zur Lochplatte (1) erfolgt und in der Folge je nach erfasster Position lediglich eine axiale Einstellung, bevorzugt eine axiale Einstellung eines vordefinierten Abstandes der Ebene von der Lochplatte (1), erfolgt.

17. Verfahren nach Anspruch 16, **dadurch gekennzeichnet, dass** die Ausrichtung der Position des zumindest einen Messers (4a, 4b, 4c, 4d) in einer Ebene in Umlaufrichtung parallel zur Lochplatte (1) in der Weise erfolgt, dass der Messerkopf mit dem zumindest einen Messer (4a, 4b, 4c, 4d) zunächst an die Lochplatte (1) gefahren wird und dort entweder durch Verschwenken oder durch Abdrehen des zumindest einen Messers (4a, 4b, 4c, 4d) an einer Abdreh-Anlagefläche (14) der Lochplatte (1) entsprechend ausgerichtet wird.

18. Verfahren nach einem der Ansprüche 14 bis 17, **dadurch gekennzeichnet, dass** die Position des zumindest einen Messers (4a, 4b, 4c, 4d) oszillierend zwischen zwei Positionen eingestellt wird, bevorzugt oszillierend in axialer Richtung zwischen einer ersten Endposition näher an der Lochplatte (1) und einer zweiten Endposition entfernter von der Lochplatte (1).

## Claims

1. An apparatus for producing granules from a melt, comprising a perforated plate (1) with melt nozzles (2) arranged therein, from which the melt emerges, wherein there is located opposite the perforated plate (1) a cutting arrangement having a blade head, which has at least one blade (4a, 4b, 4c, 4d), and a blade shaft (5), which is driven by a motor (6), so that the at least one blade (4a, 4b, 4c, 4d) passes over the melt nozzles (2) in the perforated plate (1) in a rotating manner and in doing so cuts off granules of the melt material emerging there, wherein the apparatus has a process chamber housing (7) which is connected to the perforated plate (1) and surrounds at least part of the cutting arrangement and through which a cooling medium flows, wherein the blade shaft (5) is displaceable at least axially relative to the process chamber housing (7) via at least one adjustable bearing (8), and wherein a position sensing and adjusting device is provided which comprises at least one position sensor (9), arranged in the process chamber housing (7) and/or in the perforated plate (1), and at least one position sensor pulse transmitter (10a, 10b, 10c, 10d), arranged in the region of the blade head, by means of which the position of the at least one blade (4a, 4b, 4c, 4d) relative to the perforated plate (1) with the melt nozzles (2) located therein can be determined, and comprising an actuator device (11), by which the position of the at least one blade (4a, 4b, 4c, 4d) can be set accordingly,
**characterized in that**
the blade shaft (5) is also pivotable radially relative to the process chamber housing (7) via the at least one adjustable bearing (8), and the position of the at least one blade (4a, 4b, 4c, 4d) can be set accordingly by means of the actuator device (11).

2. The apparatus according to claim 1, **characterized in that** the at least one blade (4a, 4b, 4c, 4d) can be set to rotate in a plane at a constant distance from the perforated plate (1), the distance preferably being in a range from 0.04 mm to 0.3 mm.

3. The apparatus according to claim 1 or 2, **characterized in that** the at least one position sensor pulse transmitter (10a, 10b, 10c, 10d) is arranged in the region of the at least one blade (4a, 4b, 4c, 4d).

4. The apparatus according to any of claims 1 to 3, **characterized in that** the blade head has a blade holder (3a, 3b, 3c, 3d) so that the at least one blade (4a, 4b, 4c, 4d) is replaceably held thereon, the at least one position sensor pulse transmitter (10a, 10b, 10c, 10d) being arranged in the region of the blade holder (3a, 3b, 3c, 3d).

5. The apparatus according to any of claims 1 to 4, **characterized in that** the position sensor (9) is arranged in the region of the perforated plate (1), preferably in the region of the perforated plate (1) radially inward of the melt nozzles (2).

6. The apparatus according to any of claims 1 to 4, **characterized in that** the position sensor (9) is arranged in the region of the process chamber housing (7).

7. The apparatus according to any of claims 1 to 6, **characterized in that**, in addition to the at least one position sensor pulse transmitter (10a, 10b, 10c, 10d), additionally an angular position sensor (13) is assigned to the motor shaft (5).

8. The apparatus according to any of claims 1 to 7, **characterized in that** the position sensor (9) and the at least one position sensor pulse transmitter (10a, 10b, 10c, 10d) are designed in such a way that they form an optical laser position sensing system and/or an inductive position sensing system and/or or a capacitive position sensing system.

9. The apparatus according to any of claims 1 to 8, **characterized in that** at least three position sensor pulse transmitters (10a, 10b, 10c, 10d) are provided, which preferably are each individually encoded.

10. The apparatus according to any of claims 1 to 9, **characterized in that** the actuator device (11) has a variable speed drive, preferably a two-axis variable speed drive, particularly preferably with fine-pitch gear rack(s) or a spur gear drive.

11. The apparatus according to any of claims 1 to 10, **characterized in that** the blade shaft (5), at least in one region thereof, preferably in a region thereof that faces towards the perforated plate (1), particularly preferably in such a region of up to 30% of the length of the blade shaft (5), is additionally supported by a blade shaft mount (12), the adjustable bearing (8) particularly preferably being arranged between an end region of the process chamber housing (7) and the blade shaft mount (12).

12. The apparatus according to any of claims 1 to 11, **characterized in that** provided in the region of the perforated plate (1) is a dressing contact surface (14) for dressing the at least one blade (4a, 4b, 4c, 4d) in the event of the at least one blade (4a, 4b, 4c, 4d) bearing against the dressing contact surface (14), the perforated plate (1) preferably being designed as such a dressing contact surface (14).

13. The apparatus according to any of claims 1 to 12, **characterized in that** the apparatus as a whole can be suspended from a slide rail by a suspension and is axially displaceable, wherein the suspension is provided on a housing of the motor (6) and/or on the process chamber housing (7).

14. A method for producing granules from a melt, wherein the melt emerges from melt nozzles (2), arranged in a perforated plate (1), in a process chamber housing (7) which connects to the perforated plate (1) and surrounds at least part of a cutting arrangement and through which a cooling medium flows, and granules are cut off by a cutting arrangement comprising a blade head, which has at least one blade (4a, 4b, 4c, 4d), and a blade shaft (5), which is driven by a motor (6), located opposite the perforated plate (1), wherein the blade shaft (5) is displaceable at least axially relative to the process chamber housing (7) via at least one adjustable bearing (8), and wherein a position sensing and adjusting device is provided which comprises at least one position sensor (9), arranged in the process chamber housing (7) and/or the perforated plate (1), and at least one position sensor pulse transmitter (10a, 10b, 10c, 10d), arranged in the region of the blade head, by means of which the position of the at least one blade (4a, 4b, 4c, 4d) relative to the perforated plate (1) with the melt nozzles (2) located therein is determined, and comprising an actuator device (11), by which the position of the at least one blade (4a, 4b, 4c, 4d) is set accordingly,
**characterized in that**
the blade shaft (5) is also pivotable radially relative to the process chamber housing (7) via the at least one adjustable bearing (8), and the position of the at least one blade (4a, 4b, 4c, 4d) is set accordingly by means of the actuator device (11).

15. The method according to claim 14, **characterized in that** the at least one blade (4a, 4b, 4c, 4d) is set to rotate in a plane at a constant distance from the perforated plate (1), the distance preferably being in a range from 0.04 mm to 0.3 mm.

16. The method according to claim 14 or 15, **characterized in that** first the orientation of the position of the at least one blade (4a, 4b, 4c, 4d) in a plane in the rotation direction parallel to the perforated plate (1) takes place and then, depending on the sensed position, only an axial setting takes place, preferably an axial setting of a predefined distance of the plane from the perforated plate (1).

17. The method according to claim 16, **characterized in that** the orientation of the position of the at least one blade (4a, 4b, 4c, 4d) in a plane in the rotation direction parallel to the perforated plate (1) takes place in such a way that the blade head with the at least one blade (4a, 4b, 4c, 4d) is first moved towards the perforated plate (1) and is suitably oriented there either by pivoting or by dressing the at least one blade (4a, 4b, 4c, 4d) on a dressing contact surface (14) of the perforated plate (1).

18. The method according to any of claims 14 to 17, **characterized in that** the position of the at least one blade (4a, 4b, 4c, 4d) is set to oscillate between two positions, preferably to oscillate in the axial direction between a first end position closer to the perforated plate (1) and a second end position further from the perforated plate (1).

## Revendications

1. Dispositif pour la fabrication de granulés à partir d'une masse fondue comportant une plaque perforée (1) présentant des orifices (2) agencés dedans par lesquels la masse fondue est extrudée, la plaque perforée (1) comportant un dispositif de coupe avec une tête de coupe dotée d'au moins une lame (4a, 4b, 4c,4d) et d'un porte-lame (5), entraîné par un moteur (6) faisant face à la plaque perforée (1), de sorte que ladite au moins une lame (4a 4b, 4c,4d,) effleure en rotation les orifices (2) de la plaque perforée (1) et ce faisant sépare les granulés de la masse fondue extrudée, le dispositif présentant un boîtier (7) de chambre de coupe adjacent à la plaque perforée (1) et enserrant au moins une partie (3) du dispositif de coupe et étant traversé par un fluide réfrigérant, le porte-lame (5) pouvant coulisser au moins en direction axiale vers le boîtier (7) de la chambre de coupe au moyen d'au moins un palier à réglage (8), un dispositif d'acquisition de la position et de réglage étant prévu, avec au moins un capteur de position (9) situé dans le boîtier (7) de la chambre de coupe et/ou dans la plaque perforée (1) et au moins un générateur d'impulsions pour capteur de position (10a, 10b, 10c, 10d) situé dans la région de la tête de coupe au moyen duquel la position de la au moins une lame (4a, 4b, 4c, 4d) par rapport à la plaque perforée (1) avec les orifices (2) qui s'y trouvent peut être définie et avec un actuateur (11) permettant de régler la position de la au moins une lame (4a, 4b, 4c, 4d) en conséquence,
**caractérisé en ce que**
le porte-lame (5) peut pivoter vers le boîtier (7) de la chambre de coupe au moyen du au moins un palier à réglage (8) également en direction radiale et que la position de la au moins une lame (4a, 4b, 4c, 4d) peut être réglée en conséquence au moyen de l'actuateur (11).

2. Dispositif selon la revendication 1, **caractérisé en ce que** la au moins une lame (4a, 4b, 4c, 4d) peut être réglée dans un plan suivant la rotation avec un écart constant par rapport à la plaque perforée (1), l'écart étant de préférence situé dans une plage allant de 0,04 mm à 0,3 mm.

3. Dispositif selon la revendication 1 ou 2, **caractérisé en ce que** le au moins un générateur d'impulsions pour capteur de position (10a, 10b, 10c, 10d) est situé dans la région de la au moins une lame (4a, 4b, 4c, 4d).

4. Dispositif selon une des revendications 1 à 3, **caractérisé en ce que** la tête de coupe présente un porte-lame (3a, 3b, 3c, 3d) de sorte que la au moins une lame (4a, 4b, 4c, 4d) y est maintenue et est échangeable, le au moins un générateur d'impulsions pour capteur de position (10a, 10b, 10c, 10d) étant situé dans la région du porte-lame (3a, 3b, 3c, 3d).

5. Dispositif selon une des revendications 1 à 4, **caractérisé en ce que** le capteur de position (9) est situé dans la région de la plaque perforée (1), de préférence dans la région de la plaque perforée (1) située radialement à l'intérieur des orifices (2) de la plaque.

6. Dispositif selon une des revendications 1 à 4, **caractérisé en ce que** le capteur de position (9) est situé dans la région du boîtier (7) de la chambre de coupe.

7. Dispositif selon une des revendications 1 à 6, **caractérisé en ce que** en plus du au moins un générateur d'impulsions pour capteur de position (10a, 10b, 10c, 10d), un capteur de position angulaire (13) est affecté à l'arbre-moteur (5).

8. Dispositif selon une des revendications 1 à 7, **caractérisé en ce que** le capteur de position (9) et le au moins un générateur d'impulsions pour capteur de position (10a, 10b, 10c, 10d) sont constitués de telle façon qu'ils forment un système d'acquisition de la position optique à laser et/ou un système d'acquisition de la position inductif et/ou un système d'acquisition de la position capacitif.

9. Dispositif selon une des revendications 1 à 8, **caractérisé en ce qu'**au moins trois générateurs d'impulsions pour capteur de position (10a, 10b, 10c, 10d) sont prévus, qui sont codés de préférence individuellement.

10. Dispositif selon une des revendications 1 à 9, **caractérisé en ce que** l'actuateur (11) présente un variateur, de préférence un variateur à deux arbres, de manière particulièrement préférée, une crémaillère à filetage fin ou un entraînement à pignon droit.

11. Dispositif selon une des revendications 1 à 10, **caractérisé en ce que** l'arbre porte-lame (5) au moins dans une région, de préférence dans une région tournée vers la plaque perforée (1), de manière particulièrement préférée, dans une région allant jusqu'à 30% de la longueur de l'arbre porte-lame (5) est soutenu en plus par un support d'arbre porte-lame (12), de manière particulièrement préférée, le palier à réglage (8) est situé entre une extrémité du boîtier (7) de la chambre de coupe et le support de l'arbre porte-lame (12).

12. Dispositif selon une des revendications 1 à 11, **caractérisé en ce qu'**une surface d'appui /écartement (14) est prévue dans la région de la plaque perforée (1) pour écarter la au moins une lame (4a, 4b, 4c, 4d) dans le cas du contact de la au moins une lame (4a, 4b, 4c, 4d) avec la surface d'appui/écartement (14), la plaque perforée (1) étant de préférence conçue comme la surface d'appui (14).

13. Dispositif selon une des revendications 1 à 12, **caractérisé en ce que** le dispositif dans sa totalité peut être accroché à un rail via une suspension et peut coulisser en direction axiale, la suspension étant prévue sur le boîtier du moteur (6) et/ou le boîtier (7) de la chambre de coupe.

14. Procédé pour la fabrication de granulés à partir d'une masse fondue, ladite masse fondue étant extrudée par les orifices (2) agencés dans une plaque perforée (1), dans un boitier (7) de chambre de coupe adjacent à la plaque perforée (1) et enserrant au moins une partie du système de coupe et étant traversé par un fluide réfrigérant, les granulés étant séparés par un système de coupe avec une tête de coupe avec au moins une lame (4a, 4b, 4c, 4d) et un arbre porte-lame (5) entrainé par un moteur (6) faisant face à la plaque perforée (1), l'arbre porte-lame (5) pouvant coulisser au moins en direction axiale via au moins un palier à réglage (8) vers le boitier (7) de la chambre de coupe, un dispositif d'acquisition de la position et de réglage étant prévu avec au moins un capteur de position (9) situé dans le boîtier (7) de la chambre de coupe et/ou de la plaque perforée (1) et au moins un générateur d'impulsions pour capteur de position (10a, 10b, 10c, 10d) situé dans la région de la tête de coupe, au moyen duquel la position de la au moins une lame (4a, 4b, 4c, 4d) par rapport à la plaque perforée (1) avec les orifices (2) qui s'y trouvent est définie et avec un actuateur (11) permettant de régler la position de la au moins une lame (4a, 4b, 4c, 4d) en conséquence
**caractérisé en ce que**
l'arbre porte-lame (5) peut pivoter vers le boîtier (7) de la chambre de coupe via le au moins un palier à réglage (8) également en direction radiale et la position de la au moins une lame (4a, 4b, 4c, 4d) est réglée en conséquence au moyen de l'actuateur (11).

15. Dispositif selon la revendication 14, **caractérisé en ce que** la au moins une lame (4a, 4b, 4c, 4d) est réglée dans un plan suivant la rotation avec un écart constant par rapport à la plaque perforée (1), l'écart étant de préférence situé dans une plage de 0,04 mm à 0,3 mm.

16. Procédé selon la revendication 14 ou 15, **caractérisé en ce que** tout d'abord l'alignement de la position de la au moins une lame (4a, 4b, 4c, 4d) se fait dans un plan parallèle à la plaque perforée (1) suivant la rotation et qu'ensuite selon la position saisie, seulement un réglage axial est effectué, de préférence un réglage axial d'un écart prédéterminé du plan par rapport à la plaque perforée (1).

17. Procédé selon la revendication 16, **caractérisé en ce que** l'alignement de la position de la au moins une lame (4a, 4b, 4c, 4d) dans un plan parallèle à la plaque perforée (1) suivant la rotation est effectué de telle façon que la tête de coupe avec la au moins une lame (4a, 4b, 4c, 4d) est tout d'abord amenée à la plaque perforée (1) et à cet endroit soit par pivotement ou par écartement, la au moins une lame (4a, 4b, 4c, 4d) est alignée en conséquence sur une surface d'appui ou d'écartement (14) de la plaque perforée (1).

18. Procédé selon une des revendications 14 à 17, **caractérisé en ce que** la position de la au moins une lame (4a, 4b, 4c, 4d) est réglée pour osciller entre deux positions, de préférence en direction axiale entre une première position extrême plus proche de la plaque perforée (1) et une deuxième position extrême éloignée de la plaque perforée (1).
